# FASCICULE DE BREVET EUROPEEN

(11) **EP 4 027 507 B1**
(45) Date de publication et mention de la délivrance du brevet: **16.04.2025**
(21) Numéro de dépôt: 21209115.1
(22) Date de dépôt: 18.11.2021
(51) Int. Cl.: H02P 3/18

(54) **DISSIPATION DE L ÉNERGIE DE FREINAGE GÉNÉRÉE PAR LE MOTEUR ÉLECTRIQUE DE LA MICRO-SOUFFLANTE D'UN VENTILATEUR MÉDICAL**
ABLEITUNG DER BREMSENERGIE, DIE DURCH DEN ELEKTROMOTOR DES MIKROGEBLÄSES EINES MEDIZINISCHEN BEATMUNGSGERÄTS ERZEUGT WIRD
DISSIPATION OF THE BRAKE POWER GENERATED BY THE ELECTRIC MOTOR OF THE MICRO-FAN OF A MEDICAL VENTILATOR

(30) Priorité: 06.01.2021 FR 2100087
(43) Date de publication de la demande: 13.07.2022
(73) Titulaire: Air Liquide Medical Systems, 92182 Antony Cedex (FR)
(72) Inventeur: JACQUOT, Eric, 92182 Antony Cedex (FR)
(74) Mandataire: Air Liquide

(56) Documents cités:
- WO-A1-2015/000025
- FR-A1- 2 892 243
- FR-A1- 2 958 491

## Description

L'invention concerne la dissipation de l'énergie de freinage générée par le moteur électrique de la micro-soufflante d'un ventilateur médical, lors de ses décélérations et/ou freinages.

Dans le cadre d'une ventilation assistée d'un patient, c'est-à-dire d'un être humain, le patient est relié à une machine ou appareil d'assistance respiratoire, couramment appelé ventilateur médical, délivrant un gaz respiratoire sous une pression positive (i.e. > 1 bar abs), par exemple de l'air ou de l'air enrichi en oxygène. Pour ce faire, un ventilateur médical est équipé d'un mini-compresseur aussi appelé micro-soufflante, turbine, compresseur ou analogue, qui comprend une (ou plusieurs) roue à ailettes entrainée à haute vitesse par l'axe rotatif d'un moteur électrique sur lequel la roue à ailettes est montée.

Dans les ventilateurs médicaux, i.e. les respirateurs artificiels, les moteurs à courant continu ont progressivement laissé leur place à des moteurs sans balai (*brushless* en anglais). Ce type de moteur fait partie de la famille des moteurs synchrones avec bobinage du rotor remplacé par un aimant permanent, ce qui permet de ne plus utiliser de collecteur de courant sur le rotor et de supprimer les balais.

Pendant son fonctionnement, un ventilateur médical fournit schématiquement du gaz respiratoire au patient pendant ses phases inspiratoires mais n'en fournit pas pendant ses phases expiratoires. Il est donc nécessaire de contrôler le fonctionnement de la micro-soufflante et plus précisément de son moteur électrique pour que la fourniture de gaz se fasse ou s'interrompe ou diminue en fonction desdites phases respiratoires du patient, c'est-à-dire de gérer la succession cyclique de phases d'accélération, de « plateau » et de décélération/freinage du moteur de la micro-soufflante du ventilateur médical.

Pendant les décélérations ou freinages du moteur de la micro-soufflante qui ont lieu pendant les phases expiratoires du patient, il convient d'éliminer l'énergie générée par le moteur, en particulier des tensions transitoires, afin de ne pas détériorer les composants électroniques sensibles présents sur les cartes électroniques ou autres du ventilateur médical.

Pour ce faire, des systèmes de contrôle de l'énergie de freinage ou de décélération du moteur électrique de la micro-soufflante d'un ventilateur médical ont déjà été proposés.

Ainsi, WO-A-2015/000025 propose d'agencer une (ou des) diode particulière, à savoir une diode de suppression de tensions transitoires ou TVS (pour *Transient Voltage Suppression*), par exemple Transil^{®}, directement entre les pôles (+) et (-) du bus continu reliant la source de courant au moteur de la micro-soufflante.

US-A-2011/0162647 propose un système permettant de récupérer l'énergie de freinage pour la stocker dans des batteries et la réutiliser ensuite.

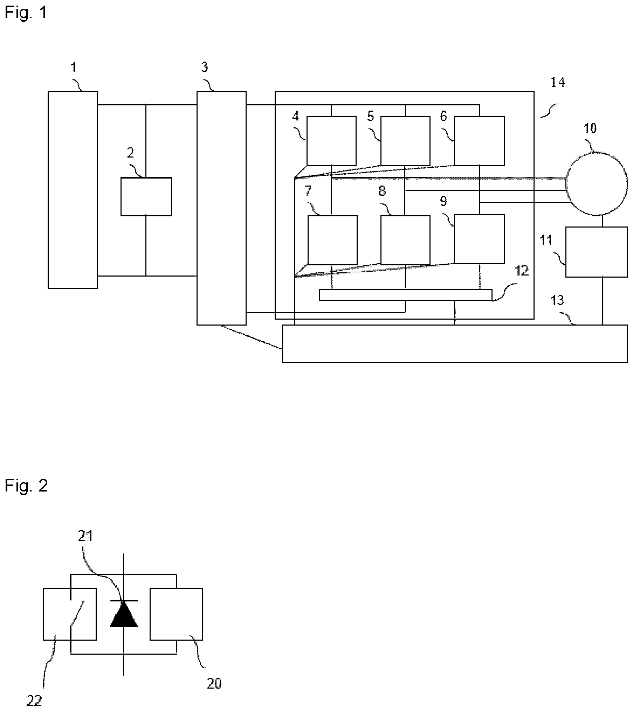

Le système de contrôle de l'énergie de freinage utilisé dans de nombreux ventilateurs médicaux incluant un onduleur interne comprend, agencés en série, un sous-ensemble résistif composé d'une à plusieurs résistances associées, en série ou en parallèle, et d'un sous-ensemble interrupteur électronique, généralement un transistor associé à une diode de roue libre, voire à un circuit amortisseur ou snubber, comme illustré en Fig. 1 et Fig. 2. Un tel système demande de piloter le transistor lorsque le moteur est en mode freinage, c'est-à-dire lorsqu'il ralentit. Ainsi, l'énergie générée pendant le freinage/ralentissement est dissipée dans la résistance et dans le transistor.

Toutefois, ces différents systèmes ne sont pas forcément très performants ou très efficaces, parfois complexes à mettre en œuvre et/ou peuvent conduire à des pertes dans l'onduleur du ventilateur lorsque le moteur accélère.

Ainsi, le système à base de transistor nécessite une commande extrêmement fiable et, en cas de de défaillance de cette commande, le respirateur est inutilisable.

Par ailleurs, si le système à base de diode TVS, ne nécessite pas de commande, puisque c'est la diode qui se met à conduire et donc à dissiper l'énergie de freinage lorsque la tension sur le bus continu commence à s'élever. Toutefois, agencer un système à diode TVS directement sur le bus de la carte électronique peut nécessiter de mettre en œuvre une diode capable de dissiper plusieurs joules et par conséquent susceptible de générer des contraintes importantes sur la carte électronique, notamment en termes de dissipation de thermique, de pic de courant et de génération de champ électromagnétique.

On connait par ailleurs FR-A-2892243 qui propose un onduleur pour moteur d'avion, tel l'Airbus A380^{®}, comprenant des cellules de commutation à connecter aux bornes d'une source de tension continue, et des interrupteurs à semi-conducteurs, ainsi qu'un dispositif d'isolement électrique à semi-conducteurs. Cet ensemble sert à résoudre un problème particulier lié à ce type de moteur utilisé en aéronautique, à savoir répondre à une défaillance de cellule en assurant une continuité de fonctionnement. Ce type d'ensemble moteur/onduleur et leur fonctionnement sont très différents de ceux d'une micro-soufflante d'un ventilateur médical, dans lequel le moteur ne fonctionne pas en continu mais doit démarrer/stopper plusieurs fois par minute, en fonction des phases inspiratoires et expiratoires du patient.

Dans ce contexte, le problème est de proposer un ventilateur médical à micro-soufflante motorisée et onduleur interne amélioré, en particulier dans lequel la dissipation de l'énergie de freinage puisse être réalisée efficacement, sans complexifier l'architecture globale du ventilateur.

La solution de l'invention porte alors sur un ventilateur médical, aussi appelé appareil d'assistance respiratoire ou respirateur médical, comprenant :
- une source de courant électrique reliée électriquement, via un bus continu, à une micro-soufflante à moteur électrique,
- un dispositif onduleur comprenant plusieurs sous-ensembles d'interrupteurs électroniques configuré pour transformer un courant continu ou une tension continue circulant dans le bus continu en un courant alternatif ou une tension alternative, et
- un dispositif de commande d'onduleur configuré pour piloter le dispositif onduleur de manière à fournir ou à interrompre la fourniture de courant alternatif ou de tension alternative au moteur électrique de la micro-soufflante,
caractérisé en ce que chaque sous-ensemble d'interrupteur électronique comprend un transistor, une diode de roue libre agencée en antiparallèle du transistor et une diode TVS de suppression de tensions transitoires agencée en parallèle de la diode de roue libre.

Selon le mode de réalisation considéré, le ventilateur médical de l'invention peut comprendre l'une ou plusieurs des caractéristiques suivantes :
- le dispositif onduleur comprend de 2 à 10 sous-ensembles d'interrupteurs électroniques, de préférence de 3 à 8 sous-ensembles, typiquement 6 sous-ensembles.
- la diode TVS est une diode Transil^{®}.
- la diode TVS est mono ou bidirectionnelle.
- les sous-ensembles d'interrupteurs électroniques sont agencés sur une carte électronique reliée électriquement au bus continu.
- le dispositif onduleur est relié électriquement au bus continu entre la source de courant électrique et le moteur électrique de la micro-soufflante.
- le moteur électrique de la micro-soufflante est sans balai.
- le dispositif de commande d'onduleur coopère avec un dispositif de détermination, i.e. d'estimation, de position angulaire de rotor configuré pour déterminer la position angulaire du rotor du moteur électrique de la micro-soufflante.
- le dispositif de commande d'onduleur est configuré pour piloter le dispositif onduleur de manière à contrôler la vitesse du moteur électrique de la micro-soufflante en fournissant ou en interrompant la fourniture de courant alternatif ou de tension alternative audit moteur électrique de manière à le soumettre cycliquement à des phases d'accélération et de freinage (i.e. ralentissement/décélération).
- le dispositif de commande d'onduleur comprend un (ou des) microprocesseur et/ou un (ou des) composant de pilotage spécialisé, par exemple il comprend un (ou des) microcontrôleur.
- le (ou les) microprocesseur agencé sur une carte électronique, i.e. carte à circuit imprimé.
- la source de courant électrique, i.e. l'alimentation électrique, comprend une ou plusieurs batteries rechargeables et/ou un cordon électrique et une prise de raccordement au secteur (i.e. 110/220 V) et un convertisseur de tension/courant.
- la source de courant électrique est de type AC/DC (courant alternatif/courant continu) fournissant une tension de moins de 40 V (courant continu), de préférence au moins 20 V, typiquement entre 25 et 38 V, par exemple de l'ordre de 26 à 28 V ou de l'ordre de 35 à 37 V.
- la source de courant électrique fournit du courant électrique à tous les composants ou éléments de l'appareil nécessitant du courant électrique pour fonctionner, notamment au moteur de la micro-soufflante, au circuit de pilotage...
- la micro-soufflante est commandée pour fonctionner selon des cycles alternant des phases de fourniture de gaz et de non-fourniture (i.e. arrêt ou forte diminution) de gaz au patient.
- pendant les phases de fourniture de gaz, le moteur de la micro-soufflante subit des accélérations.
- pendant les phases de non-fourniture de gaz, le moteur de la micro-soufflante subit des décélérations, c'est-à-dire des freinages ou ralentissements.
- le moteur électrique de la micro-soufflante est protégé par un carter de protection externe, de préférence rigide.
- la micro-soufflante comprend une volute délimitant un compartiment interne dans lequel est agencée la roue à ailettes.
- la micro-soufflante est équipée d'un moteur électrique entraînant en rotation un arbre, aussi appelé axe rotatif, portant une (ou des) roue à ailettes.
- la volute comprend une ouverture supérieure servant d'entrée de gaz dans le compartiment interne, ledit gaz étant aspiré par la roue à ailettes, durant son fonctionnement.
- la volute comprend un conduit de sortie de gaz en communication fluidique avec le compartiment interne, pour extraire dudit compartiment interne, un flux gazeux généré par la roue à ailette, lorsque ladite roue à ailette est entraînée en rotation par l'arbre.
- la volute est formée de deux demi-volutes, à savoir une volute inférieure et une volute supérieure fixées l'une à l'autre de manière étanche.
- les deux demi-volutes définissent entre elles le compartiment interne.
- la micro-soufflante délivre de l'air ou un mélange air/oxygène.
- il comprend par ailleurs un caisson, i.e. boitier ou analogue, au sein duquel est agencée la micro-soufflante motorisée.
- le caisson comprend une entrée d'air en communication fluidique avec un orifice d'entrée d'air par laquelle l'air pénètre dans l'appareil.
- selon un mode de réalisation, le caisson comprend une entrée d'oxygène en communication fluidique avec un orifice d'entrée d'oxygène, typiquement un raccord d'alimentation en oxygène, par laquelle de l'oxygène provenant d'une source d'oxygène, telle une bouteille d'oxygène ou une canalisation d'amenée d'oxygène, peut pénétrer dans l'appareil.
- le caisson comprend une sortie de flux gazeux (e.g. air ou air/O₂) en communication fluidique avec le conduit de sortie de gaz de la volute.
- le caisson est formé de polymère ou d'une autre matière.
- le caisson est formé de deux parties de caisson, c'est-à-dire typiquement de 2 demi-caissons, fixés l'un à l'autre.
- le caisson est agencé dans la carcasse du ventilateur médical.
- le moteur est commandé pour tourner à une vitesse (maximale) pouvant atteindre 50 000 à 70 000 tr/min, typiquement de 30 000 à 40 000 tr/min.
- le moteur électrique comprend un rotor et un stator.
- il comprend une IHM ou interface homme-machine.
- il comprend un écran de visualisation, i.e. d'affichage, d'informations.
- il est de type à pression continue (CPAP), à débit continu, à deux niveaux de pression (BiPAP), et/ou d'urgence ou autre.
- la micro-soufflante est commandée pour fonctionner selon des cycles alternant des phases de fourniture de gaz et de non-fourniture de gaz au patient.
- le moteur électrique de la micro-soufflante est piloté pour accélérer pendant chaque phase de fourniture de gaz et pour décélérer/freiner pendant chaque phase de non-fourniture de gaz.
- le moteur électrique de la micro-soufflante est piloté pour opérer cycliquement des phases d'accélération et de décélération/freinage successives de manière à se calquer sur les phases inspiratoires et expiratoires d'un patient.
- le moteur électrique de la micro-soufflante comprend 3 phases, c'est-à-dire qu'il est triphasé.
- le freinage du moteur est opéré par alternance de court-circuit des 3 phases du moteur.
- le freinage par court-circuit des phases du moteur est opéré à haute fréquence, c'est-à-dire entre 1 kHz et 500 kHz, de préférence une fréquence supérieure à 20 kHz, typiquement une fréquence entre 20 kHz et 50 kHz.

L'invention porte aussi sur une installation de fourniture de gaz respiratoire à un patient comprenant un ventilateur médical, i.e. un appareil d'assistance respiratoire, selon l'invention, un conduit flexible raccordé fluidiquement audit ventilateur médical et alimenté en gaz par la micro-soufflante dudit ventilateur médical, et une interface respiratoire, par exemple un masque, des canules nasales, une sonde trachéale ou analogue, reliée fluidiquement audit conduit flexible et alimentée en gaz par ledit conduit flexible, typiquement en air ou mélange air/O₂.

Avantageusement, une source d'oxygène, telle une bouteille d'oxygène sous pression, est reliée fluidiquement au ventilateur médical selon l'invention afin de lui fournir de l'oxygène permettant d'enrichir de l'air et obtenir un mélange air/O₂.

L'invention va maintenant être mieux comprise grâce à la description détaillée suivante, faite à titre illustratif mais non limitatif, en référence aux figures annexées parmi lesquelles :
Fig. 1 schématise le circuit d'alimentation électrique et de contrôle d'une micro-soufflante motorisée d'un ventilateur médical selon l'art antérieur,
Fig. 2 schématise un interrupteur électronique du dispositif onduleur du circuit d'alimentation électrique de Fig. 1,
Fig. 3 schématise un mode de réalisation d'un circuit d'alimentation électrique et de contrôle d'une micro-soufflante motorisée d'un ventilateur médical selon l'invention,
Fig. 4 illustre un mode de réalisation de l'interrupteur électronique du dispositif onduleur du circuit d'alimentation électrique de Fig. 3,
Fig. 5 illustre un autre mode de réalisation de l'interrupteur électronique du dispositif onduleur du circuit d'alimentation électrique de Fig. 3,
Fig. 6 schématise un mode de réalisation d'un ventilateur médical à micro-soufflante motorisée selon l'invention invention incluant le circuit d'alimentation électrique de Fig. 3,
Fig. 7 détaille le compartiment à micro-soufflante du ventilateur de Fig. 6, et
Fig. 8 est une vue schématique de côté de la micro-soufflante de Fig. 7.

Fig. 1 schématise un circuit d'alimentation électrique et de contrôle selon l'art antérieur du moteur électrique 10 d'une micro-soufflante d'un ventilateur médical ou respirateur artificiel permettant de comprendre comment le moteur 10 de la micro-soufflante, aussi appelée turbine ou compresseur, du ventilateur médical est alimenté en courant.

Une source de courant électrique 1, par exemple une batterie rechargeable ou une alimentation secteur (100/220V) avec convertisseur de tension, permet de fournir une tension généralement comprise entre 10 et 50V.

La source de courant électrique 1 est reliée électriquement à un dispositif ou système de stockage d'énergie 2, à un dispositif ou système de contrôle de l'énergie de freinage 3 et à un dispositif onduleur 14, via des liaisons électriques 40 appelées « bus continu » ou plus simplement « bus », afin de les alimenter en courant électrique et permettre leur fonctionnement.

Le dispositif de stockage d'énergie 2, le dispositif de contrôle de l'énergie de freinage 3 et le dispositif onduleur 14 sont agencés en parallèle sur le bus 40.

Le dispositif de stockage d'énergie 2 comprend typiquement un ou plusieurs condensateurs chimiques, i.e. entre 100 µF et 1 mF, permettant de fournir du courant transitoire rapide, c'est-à-dire fournir le courant pendant les premières nsec, voire µsec, lorsque les interrupteurs entrent en conduction.

Par ailleurs, le dispositif de contrôle de l'énergie de freinage 3 permet de dissiper l'énergie de freinage et/ou de la récupérer pour alimenter d'autres systèmes et/ou de la stocker. Le dispositif de contrôle de l'énergie de freinage 3 comprend généralement une association, en série, d'un sous-ensemble résistif comprenant une ou plusieurs résistances associées en série ou en parallèle, et d'un sous-ensemble interrupteur électronique, typiquement un transistor.

Ce système de contrôle 3 permet de piloter le transistor du sous-ensemble interrupteur électronique, lorsque le moteur 10 est en mode freinage afin que l'énergie soit dissipée principalement dans la ou les résistances du sous-ensemble résistif et accessoirement dans le sous- ensemble interrupteur électronique, c'est-à-dire dans le transistor, comme expliqué ci-après en lien avec Fig. 2.

En outre, le dispositif onduleur 14 comprend de plusieurs sous-ensembles d'interrupteurs électroniques 4-9, de préférence de 3 à 6 sous-ensembles interrupteurs électronique 4-9, permettant de transformer un courant continu ou une tension continue amenée par le bus 40 en un courant alternatif ou une tension alternative, préalablement à la fourniture de ce courant alternatif ou de cette tension alternative au moteur électrique 10 de la micro-soufflante du ventilateur médical, via des liaisons électriques 41, tels des fils électriques ou analogues.

Le moteur 10 associé au dispositif onduleur 14 est généralement du type sans balai (i.e. *brushless* en anglais). En effet, un moteur sans balai permet d'atteindre des vitesses très élevées de plusieurs dizaines de milliers de tour par minute, par exemple jusqu'à 70 000 tr/min, voire plus. Il a aussi l'avantage de ne nécessiter aucune maintenance, en particulier aucun changement de balai, et de fonctionner sans générer d'étincelle, ce qui est nécessaire dans un environnement riche en oxygène, comme c'est le cas dans les respirateurs médicaux.

Piloter le dispositif onduleur 14 permet d'alimenter et/ou d'interrompe l'alimentation en courant des bobines du stator du moteur électrique 10 de la micro-soufflante du ventilateur médical, donc de contrôler la vitesse du moteur 10 et donc le débit et/ou la pression gazeuse délivrés par la micro-soufflante du ventilateur médical, i.e. le respirateur artificiel.

Ce pilotage se fait via un dispositif ou système de commande d'onduleur 13 pour piloter l'onduleur 14, qui peut être réalisé à partir de composants analogique et logique, par exemple des amplificateurs opérationnels associé à un système de porte logique "AND" "NOR", ou de composants dédiés au contrôle des moteurs sans balai, par exemple MC33035, UDN2936W-120 ou L6234, ou encore de composants numériques, tel qu'un ou des microcontrôleurs ou microprocesseurs. En particulier, le dispositif de commande d'onduleur 13 comprend un (ou des) microprocesseur agencé sur une carte électronique, notamment un (ou des) microcontrôleur, ou un composant dédié par exemple MC33035.

Le dispositif de commande d'onduleur 13 coopère préférentiellement avec un dispositif ou système 11 de détermination de la position angulaire du rotor, par exemple un codeur incrémental ou des capteurs à effet hall, par exemple 3 capteurs positionnés à 120° les uns des autres sur le stator du moteur 10, permettant de déterminer la position angulaire du rotor du moteur 10. Alternativement, la position du rotor peut être aussi déterminée en étudiant les courants et les tensions alimentant le moteur 10. Connaître la position angulaire du rotor du moteur 10 est indispensable pour piloter un moteur sans balai. En effet, ce type de moteur doit être piloté avec une fréquence électrique identique à la fréquence de rotation du moteur. Le rotor ne peut pas être décalé de +/- 90° par rapport au champ tournant rotorique créé par l'onduleur.

Par ailleurs, le dispositif onduleur 14 comprend aussi un système de mesure du courant du moteur 12 qui peut être agencé sur la partie du dispositif onduleur 14 soumise au courant continu ou à la tension continue, comme représenté en Fig. 1, typiquement au pôle « - » du dispositif onduleur 14. Alternativement, il peut aussi être agencé sur au pôle « + » de la partie du dispositif onduleur 14 soumise au courant continu ou à la tension continue, ou encore sur les liaisons électriques 41 d'alimentation du moteur 10, c'est-à-dire du côté de la sortie en courant alternatif ou tension alternative du dispositif onduleur 14.

Ce système de mesure du courant du moteur 12 comprend généralement une ou plusieurs résistances de faible valeur (e.g. < 0,1 Ohm) permettant de mesurer le courant électrique circulant, aussi appelés shunts électriques, par exemple de 1 à 3 shunts électriques, ou tout autre système équivalent.

Cette mesure de courant permet de protéger les interrupteurs de l'onduleur contre les courants trop importants lorsque la vitesse de rotation du moteur est faible. Cette mesure peut permettre aussi de limiter l'accélération du moteur et la consommation électrique, notamment lorsque l'on fonctionne à partir d'une batterie au lithium pour laquelle tout dépassement du courant maximal est proscrit. Enfin, une telle mesure de courant peut servir aussi à piloter le moteur avec son couple maximal pour opérer des accélérations les plus efficaces.

Fig. 2 schématise l'un des interrupteurs électroniques 4-9 du dispositif onduleur 14 du circuit d'alimentation électrique de la Fig. 1, qui comprend plusieurs sous-ensembles d'interrupteurs électroniques 4-9, typiquement de 3 à 6 sous-ensembles interrupteurs électroniques.

Comme on le voit, chaque interrupteur électronique 4-9 selon l'art antérieur comprend un transistor 22, généralement un transistor à effet de champ, par exemple un MOSFET (*Metal Oxide Semiconductor Field Effect Transistor* pour transistor à effet de champ à structure métal-oxyde semi-conducteur). Toutefois, des transistors bipolaires, tels les transistors bipolaires à grille isolée ou IGBT, ou d'autres types de transistor permettant de commuter à des fréquences élevées entre 1 kHz et 500 kHz peuvent convenir.

Le transistor 22 est associé à une diode en antiparallèle, appelée généralement diode de roue libre 21, de manière à pouvoir fournir un chemin au courant emmagasiné dans les bobines du moteur 10 à chaque ouverture du transistor 22, c'est-à-dire lorsqu'on inverse la polarité sur l'une des phases du moteur ou lorsque le courant dans l'interrupteur devient trop important, quand le transistor 22 s'ouvre (ou se ferme).

En parallèle du couple transistor/diode 21, 22, on trouve généralement un circuit amortisseur, couramment appelé snubber 20, comprend un condensateur ou une association résistance et condensateur agencés en série. Ce circuit amortisseur a pour objectif d'absorber les surtensions générées lors de l'ouverture du transistor 22 et créées par les inductances parasites liés aux fils de câblage ou aux pistes du circuit imprimé de la carte électronique qui relient les sous-ensembles interrupteurs 4-9 entre eux.

Toutefois, ce système n'est pas idéal et il y aurait un avantage à remplacer le dispositif de contrôle de l'énergie de freinage 3 qui présente des risques de fiabilité, et les circuits amortisseurs ou snubbers 20 par un seul composant, afin de minimiser ces risques et de simplifier l'architecture globale.

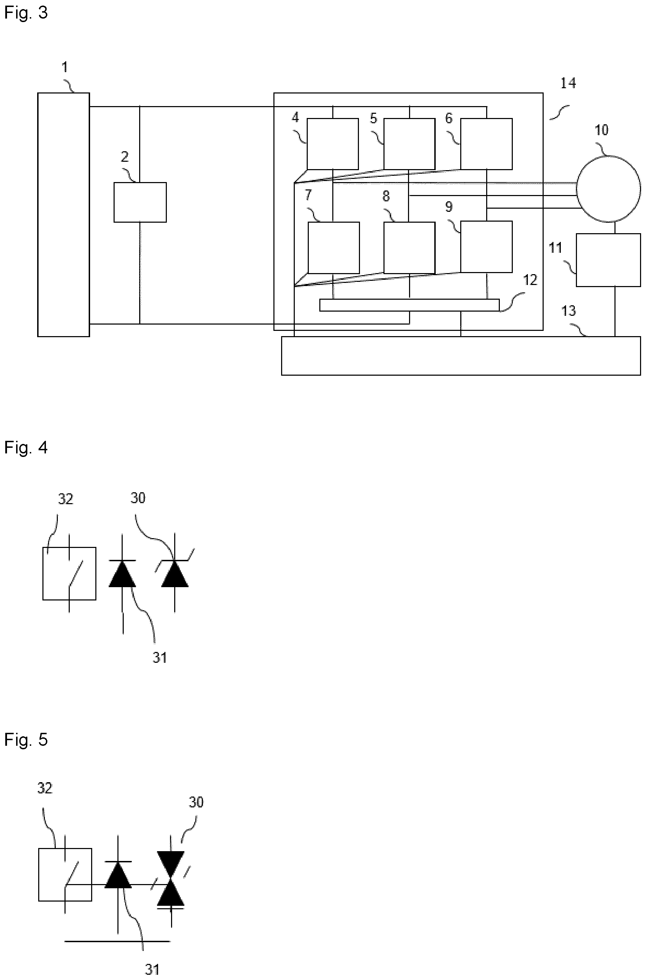

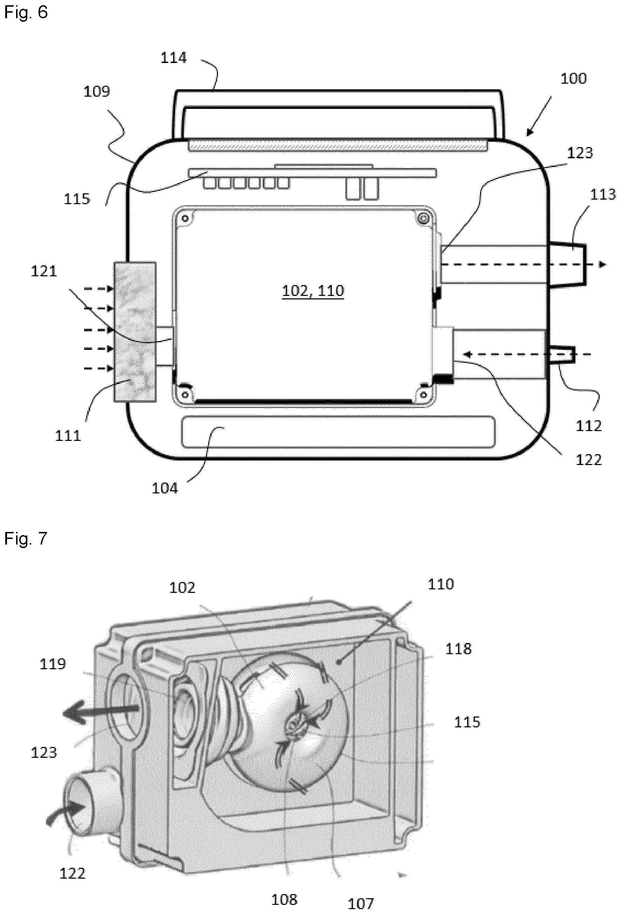

Fig. 3 schématise un mode de réalisation d'un circuit d'alimentation électrique et de contrôle d'une micro-soufflante motorisée d'un ventilateur médical 100 selon l'invention, comme celui représenté sur les Fig. 6 à Fig. 8, lequel est globalement analogue à celui de Fig. 1, à l'exception de quelques modifications de structures selon l'invention. Les parties communes ne sont donc pas répétées ci-après puisque détaillées ci-avant en rapport avec Fig. 1.

Comme on le voit, les modifications de structures selon l'invention comprennent, d'une part, une suppression du dispositif de contrôle de l'énergie de freinage 3 afin de simplifier l'architecture globale du ventilateur et, d'autre part, une modification de la structure des interrupteurs électroniques 4-9 détaillés en Fig. 2 avec suppression et remplacement du circuit amortisseur ou snubber 20 par des diodes particulières, comme expliqué ci-après en lien avec Fig. 4 et Fig. 5.

Plus précisément, les sous-ensembles d'interrupteurs électroniques 4-9, à savoir ici 6 sous-ensembles d'interrupteurs électroniques 4-9, comprend un transistor 32, une diode de roue libre 31 agencée en antiparallèle du transistor 32, et une diode TVS de suppression de tensions transitoires 30 agencée en parallèle de la diode de roue libre 31.

Préférentiellement, la diode TVS 30 de suppression de tensions transitoires est une diode Transil^{®} qui peut être mono- ou bidirectionnelle, notamment en fonction des performances de la diode de roue libre 31 antiparallèle associé au transistor 32.

Ainsi, la dissipation d'énergie de freinage se répartit dans les 6 diodes TVS 30 des 6 sous-ensembles d'interrupteurs électroniques 4-9, permettant une évacuation de la chaleur plus aisée, notamment en permettant une implantation sur une carte électronique de manière plus répartie dans l'espace. Autrement dit, les diodes TVS 30, préférentiellement des diodes Transil^{®}, permettent de dissiper l'énergie de freinage du moteur.

Associer les diodes TVS 30 aux couples diodes de roue libre 31/transistors 32 est particulièrement avantageux car du fait de la rapidité et de la robustesse des diodes TVS 30, on peut remplacer les snubbers utilisés dans l'art antérieur (cf. Fig. 2), si ces diodes TVS 30 sont agencées au plus proche des transistors 32 et ainsi de dissiper un maximum d'énergie lors du freinage du moteur 103 de la micro-soufflante 102.

Autrement dit, l'agencement particulier des sous-ensembles d'interrupteurs électroniques 4-9 selon l'invention comprenant une diode TVS 30 associée au couple diode de roue libre 31/transistor 32 permet donc de combiner les deux fonctionnalités du snubber et du système de contrôle de freinage de l'art antérieur, ce qui permet simplifier le circuit d'alimentation électrique et de contrôle de la micro-soufflante 102 sans que cela ne soit au détriment de la rapidité et de la robustesse.

Par ailleurs, les diodes TVS 30, préférentiellement de type Transil^{®}, dans les sous-ensembles d'interrupteurs électroniques 4-9 selon l'invention sont préférentiellement combinées à une mise en œuvre d'un freinage par court-circuit des phases du moteur qui est opéré à haute fréquence, c'est-à-dire entre 1 kHz et 500 kHz

La fréquence est choisie en fonction de l'inductance des bobines du moteur et de la capacité des transistors à commuter rapidement. On choisit généralement une fréquence supérieure à 20 kHz permettant de rendre inaudible le découpage dans les transistors du ventilateur médical, par exemple une fréquence entre 20 kHz et 50 kHz.

Par ailleurs, contrôler le rapport entre le temps de fermeture des transistors des sous-ensembles 7-9 et leur temps d'ouverture permet de contrôler le courant généré par le moteur 103 du ventilateur médical 100 et par conséquent la rapidité de freinage du moteur, donc aussi la rapidité de changement de pression ou de débit de gaz délivré par le ventilateur médical 100.

Lorsque les transistors sont ouverts, le courant généré par le moteur 103 passe à travers 1 à 2 diodes TVS 30 des sous-ensembles interrupteurs 4-6 de la rangée du haut sur la Fig. 3 et 1 à 2 diodes TVS 30 des sous-ensembles interrupteurs 7-9 de la rangée du bas sur la Fig. 3.

Lorsque le rotor change de position angulaire, la ou les diodes TVS 30 restantes de chaque rangée se met ou se mettent à dissiper l'énergie.

Il se peut que la répartition de l'énergie de freinage ne se soit pas exactement uniforme dans les 6 diodes TVS 30, notamment du fait de la variabilité des seuils de mise en conduction des diodes TVS 30. Ceci doit être pris en compte lors de la conception, soit en appliquant un coefficient sur l'énergie totale à dissiper par rapport à l'énergie totale que les 6 diodes TVS 30 peuvent dissiper, soit en triant les composants utilisés.

Un rééquilibrage partiel est naturellement en place sur ce type de diode car lorsqu'elle chauffe le seuil de mise en conduction augmente et par conséquent favorise la mise en conduction des autres diodes.

En effet, lorsque l'on ouvre les transistors 32, pendant l'opération de freinage, le courant voit deux chemins possibles à travers les diodes TVS 30, à savoir via la diode TVS 30 du sous-ensemble interrupteur 5 en passant par la diode de roue libre 31 du sous ensemble 4 ou via la diode TVS 30 du sous ensemble interrupteur 7 et la diode de roue libre 32 du sous-ensemble 8. Au vu de cela, la diode TVS 30 qui a le seuil de conduction le plus faible voit passer plus de courant et par conséquent dissipera plus d'énergie que l'autre diode TVS.

Un respirateur artificiel délivrant un débit ou une pression de gaz souhaité, équipé d'un ensemble moteur-roue permettant de délivrer ladite pression ou ledit débit. Le contrôle du débit ou de la pression se fait en accélérant ou freinant le moteur.

L'onduleur comprend donc un assemblage de 6 sous-ensembles interrupteurs électroniques et un système de mesure de courant. Le freinage du moteur est réalisé par une alternance de court-circuit des 3 phases à haute vitesse.

Fig. 6 à Fig. 8 schématisent un mode de réalisation d'un ventilateur médical 100 à micro-soufflante 102 motorisée selon invention incluant le circuit d'alimentation électrique et de contrôle de la micro-soufflante des Fig. 3 à Fig. 5.

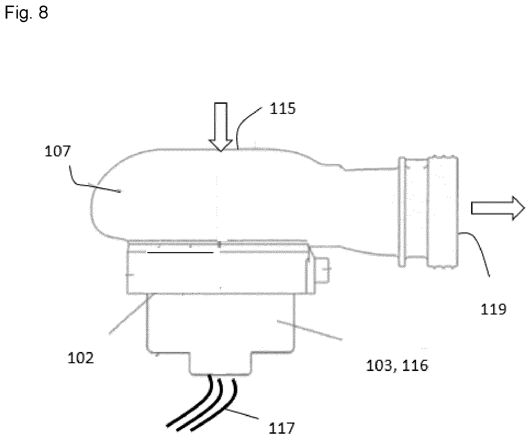

Ce ventilateur 100 est équipé en outre d'une micro-soufflante 102 à moteur électrique (visible sur Fig. 7 et Fig. 8), encore appelée turbine ou compresseur, et d'une alimentation électrique 104, par exemple une (ou plusieurs) batterie(s) et/ou des moyens de raccordement au secteur (110/220 V), tels que cordon électrique, prise de raccordement, convertisseur de tension ou autres.

La micro-soufflante 102 motorisée est agencée dans un caisson interne 110 lui-même inséré dans la carcasse périphérique 109 ou coque externe du ventilateur médical 100. Par ailleurs, la carcasse 109 du ventilateur médical 100 comprend une entrée d'air 111 servant à l'alimentation en air de la micro-soufflante 102, une entrée d'oxygène 112 servant à fournir de l'oxygène afin de pouvoir enrichir l'air en oxygène et obtenir ainsi des mélanges air/O₂, et une sortie de gaz respiratoire 113 permettant d'alimenter le patient en gaz respiratoire, typiquement de l'air ou un mélange air/O₂, provenant de la sortie de la micro-soufflante 102.

Selon un autre mode de réalisation, la micro-soufflante 102 motorisée peut être agencée directement dans le volume interne de la carcasse 109 du ventilateur médical 100, c'est-à-dire sans avoir recours à un caisson 110.

L'entrée d'oxygène 112 du ventilateur médical 100 est en communication fluidique avec une entrée d'oxygène 122 du caisson 110 et, de manière analogue, l'entrée d'air 111 et la sortie de gaz respiratoire 113 sont en communication fluidique avec, respectivement, une entrée d'air 121 et une sortie de gaz respiratoire 123 du caisson 110. Selon un autre mode de réalisation, on peut prévoir que l'injection d'oxygène ait lieu plutôt en aval de la micro-soufflante.

Optionnellement, la carcasse 109 du ventilateur médical 100 peut comprendre une poignée 114 de portage facilitant son transport par un utilisateur.

Bien entendu, le ventilateur médical 100 peut aussi comprendre d'autres éléments ou composants classiques (non schématisés) utilisés couramment dans ce type d'appareils, tel que des capteurs de pression et/ou débit, des organes de commande pneumatique, un écran de visualisation, une interface homme-machine (IHM) permettant de régler ou sélectionner des paramètres ventilatoires (niveaux de pression, volumes, modes ventilatoires...) comprenant des organes de sélection (e.g. boutons, touches digitales, curseurs...), un bouton de mise en marche ou d'arrêt (i.e. bouton « on/off ») du ventilateur 100, etc...

Fig. 7 illustre l'agencement de la micro-soufflante 102 motorisée au sein du caisson 110. Le caisson 110 est formé ici de deux parties de caisson, c'est-à-dire deux demi-caissons venant se fixer l'un à l'autre, par exemple en prenant la micro-soufflante 102 motorisée en 'sandwich'. Bien entendu, une architecture différente du caisson est possible.

Le caisson 110 peut comprendre d'autres éléments, notamment un ou des circuits de gaz ou analogues, des capteurs ou autres.

Comme schématisé en Fig. 8, la micro-soufflante 102 motorisée comprend un carter 116 renfermant un moteur électrique (non visible) et servant à le protéger, en particulier le stator et le rotor du moteur. Le carter 116 externe peut être formée d'un alliage métallique, par exemple un alliage d'aluminium ou du ZAMAK (alliage zinc, aluminium, magnésium et cuivre), ou de polymère ou de thermoplastique, par exemple du PET ou PA. Le carter 116 a généralement une section circulaire, c'est-à-dire une forme générale cylindrique. Il peut aussi comporter des ailettes ou structures de refroidissement faisant office de radiateur.

Le moteur électrique 103 est un moteur rotatif, typiquement à rotor et stator, préférentiellement sans balai ('brushless' en anglais). Il est conçu pour atteindre une vitesse de rotation, en fin d'accélération, de l'ordre de 30 000 à 40 000 tr/min, voire jusqu'à 50 000 à 70 000 tr/min. Le contrôle du fonctionnement (i.e. accélérations et décélérations/freinage) moteur électrique 103 est expliqué ci-dessus.

L'alimentation en courant électrique du moteur électrique 103 de la micro-soufflante 102 pour permettre son fonctionnement, se fait de manière classique au moyen d'une connectique adaptée 117 incluant notamment des fils ou câbles électriques, amenant le courant/tension électrique depuis l'alimentation électrique 104 (cf. Fig. 6), par exemple une batterie rechargeable, jusqu'au moteur électrique 103.

Pendant son fonctionnement, le moteur de la micro-soufflante 100 entraîne en rotation, un arbre ou axe rotatif, aussi appelé 'axe-moteur', portant une roue à ailettes, aussi appelée 'roue à pales'. Cette roue à ailettes a de préférence une section circulaire de diamètre compris entre 20 et 80 mm, typiquement entre 30 et 60 mm. La roue à ailettes comprend une première face portant des ailettes, aussi appelées 'pales' et une deuxième face dépourvue d'ailettes, c'est-à-dire plane, qui est en outre situé en regard du moteur et du carter 116. La roue à ailettes est agencée de manière à être mobile en rotation au sein du compartiment interne 118 de la volute 107 surmontant le moteur électrique 103 et le carter 116, de manière à générer un flux gazeux à une pression supérieure à la pression atmosphérique (> 1 atm).

Préférentiellement, la roue à ailettes et la volute 107 sont en matériau(x) polymère, par exemple un thermoplastique (e.g. PEEK, PA, ...), ou en alliage métallique, par exemple un alliage à base aluminium.

La volute 107 peut être formée de deux demi-volutes, à savoir une demi-volute inférieure et une demi-volute supérieure assemblées et fixées de manière solidaire et étanche l'une à l'autre, par exemple par collage ou autre. Un joint d'étanchéité peut être interposé entre ces demi-volutes. La volute 107 a une section générale circulaire. Elle comprend en outre une ouverture supérieure 115 par lequel le gaz, typiquement de l'air ou un mélange air/O₂, est aspiré dans le compartiment interne 118 de la volute 107, lors des rotations de la roue, et un conduit de sortie 119 par lequel le flux de gaz respiratoire généré dans le compartiment 118, lors des rotations de la roue, ressort de la micro-soufflante 102. Le mélange air/O₂ entrant dans la volute 107 est préférentiellement réalisé en amont de l'ouverture supérieure 115, par exemple dans une chambre de mélange (non montrée) aménagée dans le caisson 110.

Le conduit de sortie 119 est en communication fluidique avec la sortie de gaz respiratoire 123 du caisson 110 et la sortie de gaz respiratoire 113 du ventilateur 100 de sorte que le gaz sortant du compartiment interne 118 de la volute 107 circule successivement dans le conduit de sortie 119, la sortie de gaz respiratoire 23 du caisson 110 et la sortie de gaz respiratoire 113 du ventilateur 100, avant d'être acheminé jusqu'aux voies aériennes du patient via un tuyau flexible ou analogue alimentant une interface respiratoire, tel un masque respiratoire ou une sonde trachéale par exemple.

Pendant le fonctionnement du ventilateur médical 100, le moteur électrique 103 de la micro-soufflante 102 est piloté par le système de contrôle 105 du ventilateur médical 100 faisant office de moyens de pilotage. Comme détaillé ci-après, ce système de contrôle 105 comprend une carte électronique à microprocesseur, typiquement à microcontrôleur, mettant en œuvre un ou des algorithmes, et est configuré pour commander le fonctionnement du moteur électrique 103. Le système de contrôle 105 est alimenté en courant électrique provenant de l'alimentation électrique 104.

Plus précisément, le moteur électrique 103 de la micro-soufflante 102 est commandé par le système de contrôle de l'invention pour opérer cycliquement des phases d'accélération et de décélération/freinage successives de manière à se calquer sur les phases inspiratoires et expiratoires du patient, comme expliqué ci-avant.

Le ventilateur médical 100 fournit donc, pendant son fonctionnement, du gaz respiratoire, tel que de l'air, un mélange air/oxygène ou autre, au patient, pendant ses phases inspiratoires mais n'en fournit pas pendant ses phases expiratoires. Ceci se fait grâce à un contrôle efficace, selon l'invention, du fonctionnement de la micro-soufflante 102 et plus précisément de son moteur électrique 103 pour que la fourniture de gaz se fasse ou, à l'inverse, s'interrompe ou diminue en fonction desdites phases respiratoires du patient, c'est-à-dire de gérer la succession cyclique de phases d'accélération, de « plateau » et de décélération/freinage du moteur de la micro-soufflante du ventilateur médical 100. Pendant les décélérations ou freinages du moteur 103 de la micro-soufflante 102, c'est-à-dire pendant les phases expiratoires du patient, l'énergie générée par le moteur 103, en particulier les tensions transitoires, sont éliminées grâce aux sous-ensembles d'interrupteurs électroniques du dispositif onduleur de l'invention, en particulier aux diodes TVS 30 des sous-ensembles d'interrupteurs électroniques 4-9, de sorte de ne pas détériorer les composants électroniques sensibles présents sur les cartes électroniques ou autres du ventilateur médical 100.

Par exemple, le ventilateur médical 100 peut être un appareil d'assistance respiratoire délivrant du gaz à un ou plusieurs niveaux de pression, c'est-à-dire de type CPAP ou BPAP, un ventilateur d'urgence, ou encore un appareil respiratoire apte à mettre en œuvre d'autres thérapies respiratoires.

De façon générale, le ventilateur médical 100 est destiné à traiter des pathologies respiratoires chez des patients humains, adultes et/ou enfants.

## Revendications

1. Ventilateur médical (100) comprenant :
- une source de courant électrique (1) reliée électriquement, via un bus continu (40), à une micro-soufflante (102) à moteur électrique (10, 103),
- un dispositif onduleur (14) comprenant plusieurs sous-ensembles d'interrupteurs électroniques (4-9) configuré pour transformer un courant continu ou une tension continue circulant dans le bus continu (40) en un courant alternatif ou une tension alternative, et
- un dispositif de commande d'onduleur (13) configuré pour piloter le dispositif onduleur (14) de manière à fournir ou à interrompre la fourniture de courant alternatif ou de tension alternative au moteur électrique (10, 103) de la micro-soufflante (102),
**caractérisé en ce que** chaque sous-ensemble d'interrupteur électronique (4-9) comprend un transistor (32), une diode de roue libre (31) agencée en antiparallèle du transistor (32), et une diode TVS de suppression de tensions transitoires (30) agencée en parallèle de la diode de roue libre (31).

2. Ventilateur médical selon la revendication 1, **caractérisé en ce que** le dispositif onduleur (14) comprend de 2 à 10 sous-ensembles d'interrupteurs électroniques (4-9).

3. Ventilateur médical selon la revendication 1, **caractérisé en ce que** la diode TVS (30) est une diode Transil^{®}.

4. Ventilateur médical selon l'une des revendications 1 ou 3, **caractérisé en ce que** la diode TVS (30) est mono ou bidirectionnelle.

5. Ventilateur médical selon l'une des revendications 1 ou 2, **caractérisé en ce que** les sous-ensembles d'interrupteurs électroniques (4-9) sont agencés sur une carte électronique reliée électriquement au bus continu (40).

6. Ventilateur médical selon l'une des revendications 1 ou 5, **caractérisé en ce que** le dispositif onduleur (14) est relié électriquement au bus continu (40) entre la source de courant électrique (1) et le moteur électrique (10, 103) de la micro-soufflante (102).

7. Ventilateur médical selon la revendication 1, **caractérisé en ce que** le moteur électrique (10, 103) de la micro-soufflante (102) est sans balai.

8. Ventilateur médical selon l'une des revendications 1 ou 7, **caractérisé en ce que** le dispositif de commande d'onduleur (13) coopère avec un dispositif de détermination de position angulaire de rotor (11) configuré pour déterminer la position angulaire du rotor du moteur électrique (10, 103) de la micro-soufflante (102).

9. Ventilateur médical selon l'une des revendications 1 ou 8, **caractérisé en ce que** le dispositif de commande d'onduleur (13) est configuré pour piloter le dispositif onduleur (14) de manière à contrôler la vitesse du moteur électrique (10, 103) de la micro-soufflante (102) en fournissant ou en interrompant la fourniture de courant alternatif ou de tension alternative audit moteur électrique (10) de manière à le soumettre cycliquement à des phases d'accélération et de freinage.

10. Ventilateur médical selon la revendication 1, **caractérisé en ce que** la source de courant électrique (1) est de type AC/DC (courant alternatif/courant continu) fournissant une tension de moins de 40 V (courant continu).

11. Ventilateur médical selon la revendication 1, **caractérisé en ce que** le dispositif de commande d'onduleur comprend un microprocesseur, de préférence un microcontrôleur.

12. Ventilateur médical selon l'une des revendications 1 ou 9, **caractérisé en ce que** la micro-soufflante (102) est commandée pour fonctionner selon des cycles alternant des phases de fourniture de gaz et de non-fourniture de gaz au patient.

13. Ventilateur médical selon la revendication 12, **caractérisé en ce que** le moteur électrique (103) de la micro-soufflante (102) est piloté pour accélérer pendant chaque phase de fourniture de gaz et pour décélérer/freiner pendant chaque phase de non-fourniture de gaz.

14. Ventilateur médical selon l'une des revendications 12 ou 13, **caractérisé en ce que** le moteur électrique (103) de la micro-soufflante (102) est piloté pour opérer cycliquement des phases d'accélération et de décélération/freinage successives de manière à se calquer sur les phases inspiratoires et expiratoires d'un patient.

15. Installation de fourniture de gaz respiratoire à un patient comprenant un ventilateur médical (100) selon l'une des revendications précédentes, un conduit flexible raccordé fluidiquement audit ventilateur médical (100) pour être alimenté en gaz par la micro-soufflante (102) dudit ventilateur médical (100), et une interface respiratoire reliée fluidiquement audit conduit flexible pour être alimentée en gaz par ledit conduit flexible.

## Patentansprüche

1. Medizinisches Beatmungsgerät (100), umfassend:
- eine elektrische Stromquelle (1), die über einen Gleichstrombus (40) mit einem Mikrogebläse (102) mit Elektromotor (10, 103) verbunden ist,
- eine Wechselrichtervorrichtung (14), die mehrere Elektronikschalter-Unterbaugruppen (4-9) umfasst und dazu ausgestaltet ist, einen Gleichstrom oder eine Gleichspannung, der bzw. die in dem Gleichstrombus (40) fließt, in einen Wechselstrom oder eine Wechselspannung umzuwandeln, und
- eine Wechselrichtersteuervorrichtung (13), die dazu ausgestaltet ist, die Wechselrichtervorrichtung (14) so anzusteuern, dass die Abgabe von Wechselstrom oder von Wechselspannung an den Elektromotor (10, 103) des Mikrogebläses (102) zugelassen oder unterbrochen wird, **dadurch gekennzeichnet, dass** jede Elektronikschalter-Unterbaugruppe (4-9) einen Transistor (32), eine antiparallel zum Transistor (32) angeordnete Freilaufdiode (31) und eine TVS-Diode zur Unterdrückung von Transientenspannungen (30), die parallel zur Freilaufdiode (31) angeordnet ist, umfasst.

2. Medizinisches Beatmungsgerät nach Anspruch 1, **dadurch gekennzeichnet, dass** die Wechselrichtervorrichtung (14) 2 bis 10 Elektronikschalter-Unterbaugruppen (4-9) umfasst.

3. Medizinisches Beatmungsgerät nach Anspruch 1, **dadurch gekennzeichnet, dass** die TVS-Diode (30) eine Transil^{®}-Diode ist.

4. Medizinisches Beatmungsgerät nach einem der Ansprüche 1 oder 3, **dadurch gekennzeichnet, dass** die TVS-Diode (30) uni- oder bidirektional ist.

5. Medizinisches Beatmungsgerät nach einem der Ansprüche 1 oder 2, **dadurch gekennzeichnet, dass** die Elektronikschalter-Unterbaugruppen (4-9) auf einer Leiterplatte angeordnet sind, die elektrisch mit dem Gleichstrombus (40) verbunden ist.

6. Medizinisches Beatmungsgerät nach einem der Ansprüche 1 oder 5, **dadurch gekennzeichnet, dass** die Wechselrichtervorrichtung (14) elektrisch mit dem Gleichstrombus (40) zwischen der elektrischen Stromquelle (1) und dem Elektromotor (10, 103) des Mikrogebläses (102) verbunden ist.

7. Medizinisches Beatmungsgerät nach Anspruch 1, **dadurch gekennzeichnet, dass** der Elektromotor (10, 103) des Mikrogebläses (102) bürstenlos ist.

8. Medizinisches Beatmungsgerät nach einem der Ansprüche 1 oder 7, **dadurch gekennzeichnet, dass** die Wechselrichtersteuervorrichtung (13) mit einer Rotorwinkelpositionsbestimmungsvorrichtung (11) zusammenwirkt, die dazu ausgestaltet ist, die Winkelposition des Rotors des Elektromotors (10, 103) des Mikrogebläses (102) zu bestimmen.

9. Medizinisches Beatmungsgerät nach einem der Ansprüche 1 oder 8, **dadurch gekennzeichnet, dass** die Wechselrichtersteuervorrichtung (13) dazu ausgestaltet ist, die Wechselrichtervorrichtung (14) so anzusteuern, dass die Drehzahl des Elektromotors (10, 103) des Mikrogebläses (102) geregelt wird, indem die Abgabe von Wechselstrom oder von Wechselspannung an den Elektromotor (10) so zugelassen oder unterbrochen wird, dass er zyklisch Beschleunigungs- und Bremsphasen unterzogen wird.

10. Medizinisches Beatmungsgerät nach Anspruch 1, **dadurch gekennzeichnet, dass** die elektrische Stromquelle (1) vom Typ AC/DC (Wechselstrom/Gleichstrom) ist und eine Spannung von weniger als 40 V (Gleichstrom) abgibt.

11. Medizinisches Beatmungsgerät nach Anspruch 1, **dadurch gekennzeichnet, dass** die Wechselrichtersteuervorrichtung einen Mikroprozessor, bevorzugt einen Mikrocontroller, umfasst.

12. Medizinisches Beatmungsgerät nach einem der Ansprüche 1 oder 9, **dadurch gekennzeichnet, dass** das Mikrogebläse (102) gesteuert wird, um gemäß Zyklen zu arbeiten, bei denen Phasen der Abgabe von Gas und der Nichtabgabe von Gas an den Patienten alternieren.

13. Medizinisches Beatmungsgerät nach Anspruch 12, **dadurch gekennzeichnet, dass** der Elektromotor (103) des Mikrogebläses (102) angesteuert wird, um während jeder Phase der Abgabe von Gas zu beschleunigen und um während jeder Phase der Nichtabgabe von Gas zu verzögern/bremsen.

14. Medizinisches Beatmungsgerät nach einem der Ansprüche 12 oder 13, **dadurch gekennzeichnet, dass** der Elektromotor (103) des Mikrogebläses (102) angesteuert wird, um aufeinander folgende Beschleunigungs- und Verzögerungs-/Bremsphasen zyklisch so durchzuführen, dass er sich an die Einatem- und Ausatemphasen eines Patienten angleicht.

15. Anlage zur Abgabe von Atemgas an einen Patienten, umfassend ein medizinisches Beatmungsgerät (100) nach einem der vorhergehenden Ansprüche, einen Schlauch, der fluidisch an das medizinische Beatmungsgerät (100) angeschlossen ist, um durch das Mikrogebläse (102) des medizinischen Beatmungsgeräts (100) mit Gas versorgt zu werden, und eine Atemschnittstelle, die fluidisch mit dem Schlauch verbunden ist, um durch den Schlauch mit Gas versorgt zu werden.

## Claims

1. Medical ventilator (100) comprising:
- an electric current source (1) electrically connected, via a DC bus (40), to a micro-blower (102) including an electric motor (10, 103), DC being the acronym of direct current,
- an inverter device (14) comprising a plurality of electronic switch sub-assemblies (4-9), which is configured to convert a DC current or a DC voltage flowing through the DC bus (40) into an AC current or an AC voltage, AC being the acronym of alternating current, and
- an inverter control device (13) configured to control the inverter device (14) so as to supply or interrupt the supply of AC current or AC voltage to the electric motor (10, 103) of the micro-blower (102),
**characterized in that** each electronic switch sub-assembly (4-9) comprises a transistor (32), a freewheeling diode (31) arranged in anti-parallel with the transistor (32), and a TVS diode (30) arranged in parallel with the freewheeling diode (31), TVS being the acronym of transient voltage suppression.

2. Medical ventilator according to Claim 1, **characterized in that** the inverter device (14) comprises from 2 to 10 electronic switch sub-assemblies (4-9).

3. Medical ventilator according to Claim 1, **characterized in that** the TVS diode (30) is a Transil^{®} diode.

4. Medical ventilator according to either of Claims 1 and 3, **characterized in that** the TVS diode (30) is uni- or bi-directional.

5. Medical ventilator according to either of Claims 1 and 2, **characterized in that** the electronic switch sub-assemblies (4-9) are arranged on a circuit board electrically connected to the DC bus (40).

6. Medical ventilator according to either of Claims 1 and 5, **characterized in that** the inverter device (14) is electrically connected to the DC bus (40) between the electric current source (1) and the electric motor (10, 103) of the micro-blower (102).

7. Medical ventilator according to Claim 1, **characterized in that** the electric motor (10, 103) of the micro-blower (102) is brushless.

8. Medical ventilator according to either of Claims 1 and 7, **characterized in that** the inverter control device (13) interacts with a device (11) for determining rotor angular position, which is configured to determine the angular position of the rotor of the electric motor (10, 103) of the micro-blower (102).

9. Medical ventilator according to either of Claims 1 and 8, **characterized in that** the inverter control device (13) is configured to control the inverter device (14) so as to control the speed of the electric motor (10, 103) of the micro-blower (102) by supplying or interrupting the supply of AC current or AC voltage to said electric motor (10) so as to cyclically subject it to acceleration and braking phases.

10. Medical ventilator according to Claim 1, **characterized in that** the electric current source (1) is of AC/DC (alternating current/direct current) type, supplying a voltage of less than 40 VDC.

11. Medical ventilator according to Claim 1, **characterized in that** the inverter control device comprises a microprocessor, preferably a microcontroller.

12. Medical ventilator according to either of Claims 1 and 9, **characterized in that** the micro-blower (102) is controlled to operate in alternating cycles of phases of supplying gas and of not supplying gas to the patient.

13. Medical ventilator according to Claim 12, **characterized in that** the electric motor (103) of the micro-blower (102) is controlled to accelerate during each phase of supplying gas and to decelerate/brake during each phase of not supplying gas.

14. Medical ventilator according to either of Claims 12 and 13, **characterized in that** the electric motor (103) of the micro-blower (102) is controlled to cyclically effect successive phases of acceleration and deceleration/braking so as to match the inhalation and exhalation phases of a patient.

15. Installation for supplying breathing gas to a patient, comprising a medical ventilator (100) according to any of the preceding claims, a flexible duct fluidically connected to said medical ventilator (100) with a view to being supplied with gas by the micro-blower (102) of said medical ventilator (100), and a respiratory interface fluidically connected to said flexible duct with a view to being supplied with gas via said flexible duct.
